(19) **Europäisches Patentamt**
**European Patent Office**
**Office européen des brevets**

(11) **EP 2 559 895 A1**

(12) **EUROPÄISCHE PATENTANMELDUNG**

(43) Veröffentlichungstag:
20.02.2013 Patentblatt 2013/08

(51) Int Cl.:
*F03D 11/00* (2006.01)

(21) Anmeldenummer: 11177687.8

(22) Anmeldetag: 16.08.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(71) Anmelder: Baumer Electric AG
8501 Frauenfeld (CH)

(72) Erfinder:
• Gross, Ralf
8280 Kreuzlingen (CH)
• Weigel, Michael
88142 Wasserburg (DE)

(74) Vertreter: Strauss, Steffen
Baumer Innotec AG
Hummelstrasse 17
Group Intellectual Property
8501 Frauenfeld (CH)

(54) **Verfahren und eine Vorrichtung zur Bestimmung einer Verformung eines Rotorblattes**

(57)    Die Erfindung betrifft eine Vorrichtung und ein Verfahren zur Bestimmung einer Verformung eines Rotorblattes einer Windkraftanlage mit einer Sende- und Empfangsvorrichtung, wenigstens einer Transponder Einrichtung und eine Recheneinrichtung,

wobei die wenigstens eine Transponder Einrichtung in Längsachse des Rotorblatts vorgesehen ist, wobei die Sende- und Empfangsvorrichtung wenigstens zwei Antennen umfasst,

wobei von jeder der wenigstens zwei Antennen ein Sendesignal aussendbar ist, welches von der wenigstens einen Transponder Einrichtung empfangbar ist,

wobei von der wenigstens einen Transponder Einrichtung ein Antwortsignal aussendbar ist, welches von jeder der wenigstens zwei Antennen empfangbar ist,

wobei von der Recheneinrichtung ein Zeitunterschied zwischen dem Aussenden des Sendesignals und dem Empfang des Antwortsignals die Ortkoordinaten der wenigstens einen Transponder Einrichtung bestimmbar sind und

wobei eine Abweichung dieser Ortskoordinaten von Orts— Sollkoordinaten ein Mass für die Verformung des Rotorblatts an der Stelle der wenigstens einen Transponder Einrichtung sind.

Fig. 1

**Beschreibung**

Die Erfindung betrifft ein Verfahren und eine Vorrichtung zur Bestimmung einer Verformung eines Rotorblattes einer Windkraftanlage gemäss Anspruch 1 und Anspruch 10.

Moderne Windkraftanlagen umfassen einen Turm und eine auf dem Turm drehbar gelagerten Gondel mit einem Rotor. Der Rotor umfasst in der Regel mehrere Rotorblätter. Die Rotoren derartiger Windkraftanlagen haben heutzutage Durchmesser von bis zu 130 m. Ein hoher Wirkungsgrad, eine minimale Schallemission, ein geringer Materialeinsatz und eine hohe Lebensdauer sind die Kriterien für die Konzipierung und Optimierung von solchen Rotoren. Moderne Rotorblatter werden in der Regel aus glasfaser- oder kohlenstofffaserverstärktem Kunststoff (GFK bzw. CFK) gefertigt.

Bei einer herkömmlichen Anlage mit einer

Blattwinkelsteuerung misst ein elektronischer Regler ständig die Leistungsabgabe der Anlage. Wenn diese zu hoch ist, wird dem Blattverstellmechanismus ein Kommando geschickt, damit er die Rotorblätter aus dem Wind dreht. Umgekehrt werden die Blätter in den Wind gedreht, wenn der Wind wieder nachlässt. Der Blattwinkel wird eingestellt, indem die Rotorblätter um Ihre Längsachse gedreht werden. Die Steuerung verstellt die Blätter, wenn sich die Windgeschwindigkeit ändert. So wird sichergestellt, dass die Rotorblätter immer im richtigen Winkel stehen, um bei allen Windgeschwindigkeiten das Maximum der Windenergie umzusetzen.

Damit die Windkraftanlage besonders effizient betrieben werden kann, kommt es darauf an, eine möglichste exakte Steuerung des Blattwinkels zu ermöglichen.

Herkömmlicherweise wird dazu die Verformung des Rotorblattes mittels eines optischen Systems gemessen, welches einen Lichtstrahl zu einem Reflektor sendet. Eine Detektorfläche misst den Auftreffpunkt des reflektierten Lichtstrahls. Durch Ortsänderung der Abbildung des Reflektors in einer Kamera wird dann der Ort des Reflektors ermittelt. Da der Reflektor am Rotorblatt befestigt ist, entspricht eine Ortsänderung des Reflektors einer bestimmten Verformung des Rotorblattes.

Das dargestellte System ist ein optisches System.

Die Messung der Auslenkung des Rotorblattes ist auf das optische Sichtfeld des ausgesendeten Lichtstrahls begrenzt. In der Praxis hat diese zur Folge, dass der Reflektor beispielsweise nicht oder nur mit grossem Aufwand an der Rotorblattspitze oder in deren Nähe angeordnet werden kann.

Der Erfindung liegt daher die Aufgabe zugrunde, die vorstehend genannten Probleme zu überwinden und insbesondere eine sichere Prüfung einer Verformung eines Rotorblattes zu ermöglichen.

Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Demgemäß sieht die Erfindung ein Verfahren zur Bestimmung einer Verformung eines Rotorblattes einer Windkraftanlage mit den folgenden Verfahrensschritten vor:

Von wenigstens zwei Antennen einer Sende- und Empfangsvorrichtung wird ein Sendesignal ausgesendet, welches von wenigstens einer Transponder Einrichtung empfangen wird. Die wenigstens eine Transponder Einrichtung sendet ein Antwortsignal, welches wiederum von den wenigstens zwei Antennen der Sende- und Empfangsvorrichtung empfangen wird, wobei durch einen Zeitunterschied zwischen dem Aussenden des Sendesignals und dem Empfang des Antwortsignals die Ortskoordinaten der wenigstens einen Transponder Einrichtung bestimmt werden und wobei eine Abweichung dieser Ortskoordinate von Orts-Sollkoordinaten ein Mass für die Verformung des Rotorblatts an der Stelle der wenigstens einen Transponder Einrichtung sind.

Die erfindungsgemäße Vorrichtung zur Bestimmung einer Verformung eines Rotorblattes einer Windkraftanlage umfasst eine Sende- und Empfangsvorrichtung, wenigstens eine Transponder Einrichtung und eine Recheneinrichtung, wobei die wenigstens eine Transponder Einrichtung in Längsachse des Rotorblatts vorgesehen ist, wobei die Sende-und Empfangsvorrichtung wenigstens zwei Antennen aufweist, wobei von jeder der wenigstens zwei Antennen ein Sendesignal aussendbar ist, welches von der wenigstens einen Transponder Einrichtung empfangbar ist. Von der wenigstens einen Transponder Einrichtung ist dabei ein Antwortsignal aussendbar, welches von jeder der wenigstens zwei Antennen empfangbar ist. Von der Recheneinrichtung sind ferner die Laufzeiten zwischen dem Aussenden des Sendesignals und dem Empfang des Antwortsignals bestimmbar und damit die Ortkoordinaten der wenigstens einen Transponder Einrichtung ermittelbar. Eine Abweichung dieser Ortskoordinaten von Orts-Sollkoordinaten ist hierbei erfindungsgemäss ein Mass für die Verformung des Rotorblatts an der Stelle der wenigstens einen Transponder Einrichtung.

Die Transponder Einrichtung ist vorteilhaft als RFID Transponder ausgeführt, wobei die Sende- Empfangseinheit RFID Signale sendet und empfängt.

Die Sende- Empfangseinheit umfasst eine RF-Lesevorrichtung die dazu ausgebildet ist, ein Auslesesignal auszusenden, wobei das Auslesesignal von der Transponder Einrichtung empfangen wird. Die Transponder Einrichtung ist dazu ausgebildet, ein Antwortsignal zu senden, welches von der Sende- Empfangseinheit, insbesondere von den wenigstens zwei Antennen empfangen wird. Die Richtcharakteristik der wenigstens zwei Antennen der Sende- Empfangseinheit erlaubt die Platzierung der Transponder Einrichtung an oder in das distale Ende des Rotorblattes (Spitze des Rotorblattes).

Vorzugsweise ist die erfindungsgemässe Vorrichtung dazu ausgebildet, einen Zeitunterschied zwischen dem Aussenden des Auslesesignals und dem Empfang des Antwortsignals zu messen und anhand des Zeitunterschiedes, die Koordinaten der Transponder Einrichtung von der RF-Lesevorrichtung zu erfassen. Verbiegt sich das Rotorblatt im Wind, so ändert sich die Position des distalen Endes des Rotorblattes zu Teilen der Anlage, insbesondere dem Turm. Diese Positionsveränderung und damit auch Positionsänderung der Transponder Einrichtung ist ein geeignetes Maß für die Verformung des Rotorblattes.

Gemäß einem bevorzugten Ausführungsbeispiel der vorliegenden Erfindung sind die Sende- und Empfangsvorrichtung in der Narbe des Rotors der Windkraftanlage und die wenigstens eine Transponder Einrichtung in Längsachse des wenigstens einen Rotorblatts vorgesehen. Alternativ hierzu kann die Sende- und Empfangsvorrichtung auch in dem proximalen Ende, also zur Narbe des Rotors hin, vorgesehen sein.

Die Sende- und Empfangsvorrichtung ist also ortsfest relativ zur Rotornabe bzw. zu dem proximalen Ende des Rotorblattes angeordnet. Die Rotornabe verformt sich im Wind nicht, weshalb die Platzierung der Sende- und Empfangsvorrichtung in der Rotornabe ein geeigneter Bezugspunkt zur Messung der Rotorblattverformung ist. Die Transponder Einrichtung ist hingegen ortsfest relativ zu einem Abschnitt des Rotorblatts angeordnet. Wird das Rotorblatt verformt, so ändert sich folglich der Abstand des Rotorblattabschnittes relativ zu der Rotornabe.

Die Sende- und Empfangsvorrichtung umfasst wenigstens zwei Antennen, die bevorzugt in einem Antennenarray ausgeführt sind.

Die Vorrichtung zur Bestimmung der Verformung eines Rotorblattes ist dazu ausgebildet, aus dem Abstand der Transponder Einrichtung zu den wenigstens zwei Antennen eine Verformung des Rotorblattes zu ermitteln. Die räumliche Positionsmessung wird dadurch realisiert, dass durch Verwendung von wenigstens zwei Antennen eine RFID-Radarmessung oder eine Messung nach dem Triangulationsprinzip durchgeführt wird.

Eine Verwendung von drei Antennen ermöglicht eine räumliche Bestimmung der Ortskoordinaten der Transponder Einrichtung

Vorzugsweise ist die erfindungsgemässe Vorrichtung dazu ausgebildet, einen Zeitunterschied zwischen dem Aussenden des Auslesesignals und dem Empfang des Antwortsignals zu messen und anhand des Zeitunterschiedes, die Koordinaten der Transponder Einrichtung von der RF-Lesevorrichtung zu erfassen. Verbiegt sich das Rotorblatt im Wind, so ändert sich die Position des distalen Endes des Rotorblattes zu Teilen der Anlage, insbesondere dem Turm. Diese Positionsveränderung ist ein geeignetes Maß für die Verformung des Rotorblattes.

Gemäß einem bevorzugten Ausführungsbeispiel der vorliegenden Erfindung umfasst die erfindungsgemässe Vorrichtung zusätzlich zumindest eine optisch erfassbaren Markierung auf einer Längsposition des wenigstens einen Rotorblatts, eine Kamera mit einem Matrix-Sensor zur Erfassung der optisch erfassbaren Markierung, eine Bildverarbeitungsvorrichtung und eine Recheneinrichtung, wobei die Kamera so auf die optisch erfassbare Markierung gerichtet ist, dass die optisch erfassbare Markierung auf den Matrix-Sensor abbildbar ist.

Die Bilddaten des Matrix-Sensors sind hierbei der Bildverarbeitungsvorrichtung zuführbar und von dieser eine Bilderkennung durchführbar, derart, dass die Position der optisch erfassbaren Markierung auf dem Matrix-Sensor ermittelbar ist.

Die optisch erfassbare Markierung ist als ein Reflektor, vorzugsweise ein Retoreflektor ausgebildet. Von der Recheneinrichtung ist eine Abweichung der Position der optisch erfassbaren Markierung von zumindest einem Sollwert ermittelbar und ferner quantifizierbar. Damit ist die Position der optisch erfassbaren Markierung relativ zu der optischen Achse der Kamera feststellbar.

Die Kamera kann somit die Positionen der optisch erfassbaren Markierung erfassen. Dazu wird die Markierung auf einer Sensorfläche der Kamera abgebildet. Die Markierung kann dabei auf einen Punkt der Sensorfläche so abgebildet werden, dass eine laterale Änderung der Position der Markierung eine Änderung der Position des Abbildungspunktes auf der Sensorfläche der Kamera bewirkt. Als lateral kann eine Richtung verstanden werden, die senkrecht zu einem Verbindungsvektor zwischen Sensor und Markierung steht.

Bei Kenntnis der Entfernung zwischen Sensor und Markierung kann damit eine laterale Verformung des Rotorblatts aus der Änderung der Position des Abbildungspunktes auf der Sensorfläche ermittelt werden.

Mit anderen Worten, eine Änderung der Position des Abbildungspunktes auf der Sensorfläche ist proportional zu dem Winkel zur Flächennormalen der Sensorfläche um den sich die Markierung relativ zum Sensor bewegt.

Eine Positionsänderung der Markierung entlang der optischen Achse des Sensors kann auf Basis einer geometrischperspektivischen Betrachtung erfasst werden, mittels eines Verhältnisses zwischen einer Abmessung der Markierung und einer Abmessung ihrer Abbildung auf der Sensorfläche, vor und nach der Positionsänderung der Markierung.

Vorzugsweise ist ein Vergleich der Abweichung der optisch erfassbaren Markierung von der Sollposition mit der Abweichung der die aus den empfangenen Antwortsignals der Transponder Einrichtung bestimmten Ortskoordinaten der wenigstens einen Transponder Einrichtung von den Orts-Sollkoordinaten vorgesehen.

Hiermit wird also die optische Messung der

Rotorblattverformung mit der Laufzeitmessung kombiniert. Die optische Messung ist geeignet um schnelle Veränderungen des Rotorblattes, wie etwa Schwingungen zu erfassen. Allerdings ist es aufgrund des Sichtfensters schwer möglich die absolute Position der Rotorblattspitze zu erfassen.

Insbesondere ist die optische Messung aufgrund der Sichtortung in der Distanz beschränkt. Schließlich erhöht die Redundanz beider Verfahren die Zuverlässigkeit und Genauigkeit der Messung. Somit lässt sich in vorteilhafter Weise die Fehlersicherheit erhöhen.

In einer weiteren vorteilhaften Ausführung der vorliegenden Erfindung ist eine Vielzahl von Transponder-Einrichtung in Längsachse des Rotorblattes vorgesehen. Die Sende- und Empfangseinheit steuert hierzu verschiedene Transponder-Einrichtung sequenziell an.

Weiter kann in vorteilhafter Weise eine Winkelsteuerung des wenigstens einen Rotorblatts vorgesehen sein, die einen Blattwinkel des Rotorblattes mit einem Stellglied in Abhängigkeit von dem Mass der Verformung des Rotorblatts an der Stelle der wenigstens einen Transponder Einrichtung steuert. Zudem kann eine Drehzahl des Rotors als eine weitere Grösse für die Blattwinkelsteuerung der Windkraftanlage verwendet werden.

Bevorzugte Ausführungsbeispiele der vorliegenden Erfindung werden nachfolgend anhand der beigefügten Figuren beschrieben.

Dabei zeigen:

Fig. 1: die erfindungsgemässe Vorrichtung zur Bestimmung einer Verformung eines Rotorblattes einer Windkraftanlage in einer ersten Ausführung,

Fig. 2: die erfindungsgemässe Vorrichtung zur Bestimmung einer Verformung eines Rotorblattes einer Windkraftanlage in einer zweiten Ausführung und

Fig. 3: eine Kombination einer optischen Messvorrichtung mit der erfindungsgemässen Vorrichtung zur Bestimmung einer Verformung eines Rotorblattes einer Windkraftanlage.

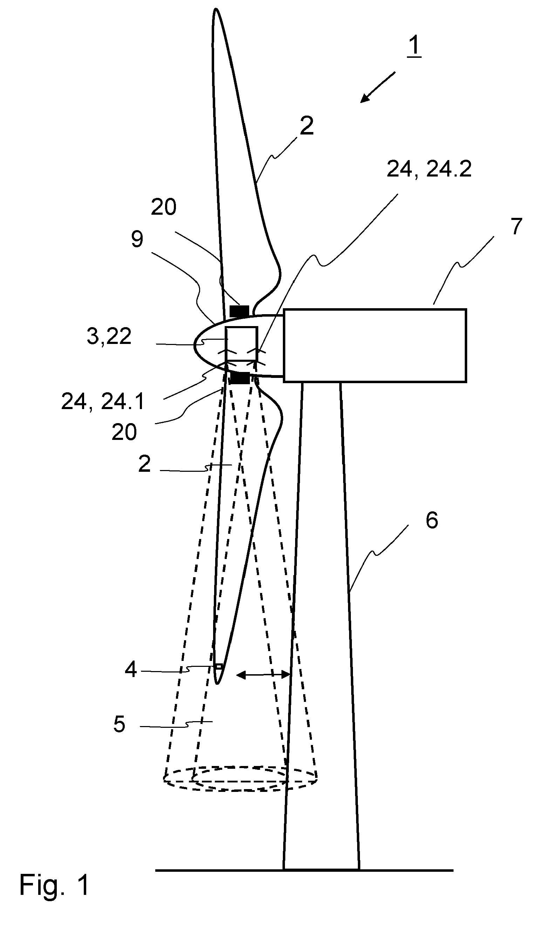

In Figur 1 ist eine Windkraftanlage 1 mit Vorrichtung zur Bestimmung einer Verformung eines Rotorblattes 2 in einer ersten Ausführung der Erfindung schematisch dargestellt. Die Windkraftanlage 1 umfasst einen Turm 6 auf dem eine Gondel 7 befestigt ist. An der Gondel 7 ist eine Rotornabe 9 befestigt, an welcher Rotorblätter 2 angebracht sind.

Vorrichtung zur Bestimmung einer Verformung eines Rotorblattes 2 besteht aus einer Sende- und Empfangsvorrichtung 3 einer Transponder Einrichtung 4 und einer Recheneinrichtung 22. Die Transponder Einrichtung 4 ist in der Längsachse des Rotorblatts 2 vorgesehen. Die Sende-und Empfangsvorrichtung 3 umfasst zwei Antennen 24.1 und 24.2. Jeder der zwei Antennen 24.1, 24.2 sendet ein Sendesignal mit einer Richtcharakteristik 5 aus, welches von der Transponder Einrichtung 4 empfangbar ist. Die Transponder Einrichtung 4 sendet wiederum ein Antwortsignal aus, welches von jeder der zwei Antennen 24.1 und 24.2 empfangbar ist. Mit einer Recheneinrichtung 22 ist ein Zeitunterschied zwischen dem Aussenden des Sendesignals der Antennen 24.1 und 24.2 und dem Empfang des Antwortsignals der Transponder Einrichtung 4 die Ortkoordinaten der Transponder Einrichtung 4 bestimmbar. Eine Abweichung dieser Ortskoordinaten von Orts-Sollkoordinaten der Transponder Einrichtung 4 ist dabei ein Mass für die Verformung des Rotorblatts an der Stelle der wenigstens einen Transponder Einrichtung 4.

Mithin handelt es sich bei der Sende- und Empfangsvorrichtung 3 und der Transponder Einrichtung 4 um ein RFID-System. Die Antennen 24.1 und 24.2 erzeugen ein hochfrequentes elektromagnetisches Wechselfeld. Die Transponder Einrichtung 4 empfängt das Signal. Der Begriff Transponder der Transponder Einrichtung 4 ist zusammengesetzt aus den Begriffen Transmitter (Sender) und Responder (Empfänger) und beschreibt letztlich das vorgenannte Verhalten.

Die Richtcharakteristik 5 beschreibt, in welche Richtung das Sendesignal der Antennen 24.1 und 24.2 von der Sende-und Empfangsvorrichtung 3 ausgesandt wird. Die Transponder Vorrichtung 4 muss also innerhalb des Richtkegels angeordnet sein, damit sie das Signal der Antennen 24.1 und 24.2 empfangen und beantworten kann. Damit beschreibt die Richtcharakteristik gleichzeitig eine maximale Verformung des Rotorblattes 2, die durch die Messvorrichtung erfassbar ist. Die Richtcharakteristik der Antennen 24.1 und 24.2 erlaubt die Platzierung der Transponder Einrichtung 4 an oder in das distale Ende des Rotorblattes 2 (Spitze des Rotorblattes 2).

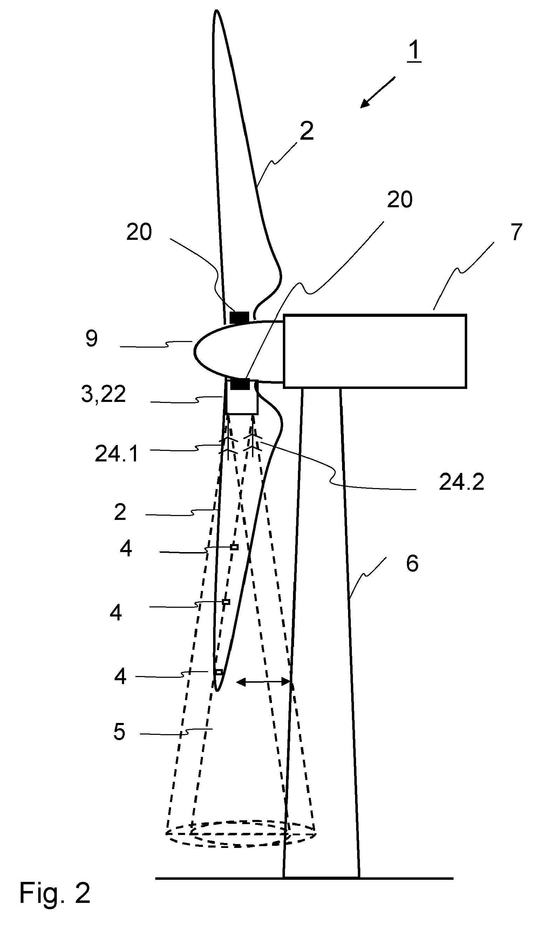

Durch die autarke Energieversorgung ist bei der Transponder Einrichtung 4 von einer hohen Lebensdauer und Zuverlässigkeit auszugehen. Die Antennen 24.1 und 24.2 der Sende- und Empfangsvorrichtung 3 sind in der Ausführung der Fig. 1 in der Nabe 9 der Windkraftanlage 1 angeordnet. Alternativ dazu, dargestellt in Fig. 2, können die Antennen 24.1 und 24.2 der Sende- und Empfangsvorrichtung 3 in dem proximalen Ende des Rotorblattes 2 vorgesehen werden. Die Antennen 24.1 und 24.2 erzeugen ein Lesesignal, das die Transponder Einrichtung 4 aktiviert, so dass ihre Position lokalisiert werden kann. Dies erfolgt im Blickfeld der Antennen 24.1 und 24.2. Reichweite und Genauigkeit hängen von dem verwendeten Verfahren ab.

In Figur 1 ist insbesondere dargestellt, dass mehrere Transponder Einrichtungen 4 in unterschiedlichem Abstand von der Nabe 9 der Windkraftanlage 1 angeordneten Sende- und Empfangsvorrichtung 3 in dem oder an dem Rotorblatt 2 angebracht sind. Es besteht die Möglichkeit sowohl aktive als auch autark arbeitende Transponder Einrichtungen 4 im oder ausserhalb des Rotorblattes 2 anzuordnen. Aufgrund der Verformung des Rotorblattes 2 ändert sich der Abstand der Transponder Einrichtung 4 zu der Sende- und Empfangsvorrichtung 3. Aus der Laufzeit des von der Transponder Einrichtungen 4 zurückgesandten Signals kann also auf die Verformung des Rotorblattes 2 zurückgeschlossen werden.

Die mehrere Transponder Einrichtungen 4 werden vorzugsweise in festen Abständen zur Rotornabe 9 angeordnet, damit ein relativ exaktes Bild einer Verformung des Rotorblatts 2 ermittelt werden kann.

Bei der Ausführung der Fig. 1 und 2 handelt es sich um eine RFID-Radarmessung. Es werden, wir beschrieben, von jeweils einer der zwei Antennen 24.1 und 24.2 Sendesignale erzeugt. Die Transponder Einrichtung 4 empfängt das Signal und sendet ein Antwortsignal an die Sende- und Empfangsvorrichtung 3 zurück. Eine Recheneinrichtung ermittelt die Laufzeiten des jeweiligen Sendesignals der zwei Antennen 24.1 und 24.2 und des Antwortsignals der Transponder Einrichtung 4. Aus den Laufzeiten wird eine Entfernung der Transponder Einrichtung 4 von der Sende- und Empfangsvorrichtung 3 und damit die Position der Transponder Einrichtung 4 ermittelt.

Die Ermittlung erfolgt mit den Gleichungen:

$$S1 = 2 \times c \times t1$$

$$S2 = 2 \times c \times t2$$

Dabei entsprechen:

$S1,2$      einer Entfernung der Transponder Einrichtung 4 von der Sende- und Empfangsvorrichtung 3
$t1,2$      einer Laufzeit und
$c$         der Lichtgeschwindigkeit.

Von der Recheneinheit 22, die als ein Teil der Sende- und Empfangsvorrichtung 3 ausgebildet sein kann, wird die Zeitdifferenz vom Senden bis zum Empfangen gemessen.

Durch die Zeit t1, t2 kann dabei direkt auf die Entfernung der Transponder Einrichtung 4 zur Sende- und Empfangsvorrichtung 3 geschlossen werden.

Durch die Verwendung von zwei Antennen 24.1, 24.2, der Ausbreitungsrichtung des Messvolumens und der ermittelten Entfernung zur Transponder Einrichtung 4 können die 2 D Koordinaten der Transponder Einrichtung 4 im überlagerten Messvolumen ermitteln werden.

Werden drei oder mehr Antennen 24.1, 24.2, 24.x verwendet ist die Ermittlung der Ortskoordinaten der Transponder Einrichtung 4 im 3D Raum möglich.

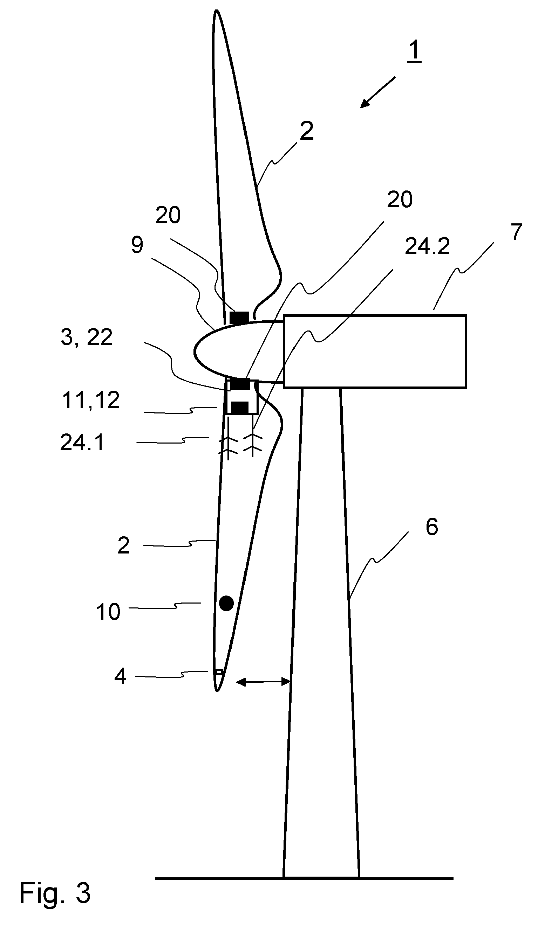

In Figur 3 ist ein weiteres Ausführungsbeispiel der vorliegenden Erfindung dargestellt. Es handelt sich im Wesentlichen um eine Weiterentwicklung des ersten und zweiten Ausführungsbeispiels. Die einander entsprechenden Merkmale sind in allen Ausführungsbeispielen mit den gleichen Bezugszeichen bezeichnet, so dass insoweit auf die Beschreibung der Figur 1 verwiesen wird. Auf eine Darstellung der Richtcharakteristik der Antennen 24.1 und 24.2 wurde aufgrund der Übersichtlichkeit verzichtet.

Zusätzlich zu den hochfrequentes elektromagnetisches Sende-und Empfangsvorrichtung 3 und der Transponder Einrichtung 4 umfasst das Ausführungsbeispiel gemäß Figur 3 eine weitere Vorrichtung zur Bestimmung einer Verformung eines Rotorblattes einer Windkraftanlage.

Diese optische Messvorrichtung umfasst eine optisch erfassbaren Markierung auf einer Längsposition des Rotorblatts 2, eine Kamera 11 mit einem Matrix-Sensor 12 zur Erfassung der optisch erfassbaren Markierung 10, eine Bildverarbeitungsvorrichtung und eine Recheneinrichtung. Die optisch erfassbare Markierung ist als ein Retoreflektor 10 ausgebildet.

Die Bildverarbeitungsvorrichtung und eine Recheneinrichtung sind Teil der Kamera 11 und nicht explizit dargestellt.

Die Kamera 11 ist so auf den Retoreflektor 10 gerichtet ist, dass der Retoreflektor 10 auf den Matrix-Sensor 12 abbildbar ist, wobei die Bilddaten des Matrix-Sensors 12 der Bildverarbeitungsvorrichtung zuführbar sind und mit der Bildverarbeitungsvorrichtung eine Bilderkennung durchführbar ist mit der die Position des Retoreflektors 10 auf dem Matrix-Sensor 12 ermittelbar ist. Von der Recheneinrichtung ist eine Abweichung der Position des Retoreflektors 10 von zumindest einem Sollwert ermittelbar und quantifizierbar und damit ist die Position des Retoreflektors 10 relativ zu der optischen Achse der Kamera 11 feststellbar ist.

Die Anordnung des Retoreflektors 10 und der Transponder Einrichtung 4 kann auf verschiedenste Weise geschehen. Eine denkbare Möglichkeit wäre den Retoreflektor 10 und die Transponder Einrichtung 4 an die annähernd gleiche örtliche Position zu platzieren. Damit kann der der Retoreflektor 10 weiter zur Rotorblattspitze angeordnet werden. Sollten der Retoreflektors 10 durch starke Verbiegung oder Torsion aus einem optischen Sichtfeld gelangen kann die Transponder Einrichtung 4 die Position weiter erfassen. Eine weitere Möglichkeit besteht darin, den Retoreflektor 10 im Abstand 1/3 der Rotorblattlänge einzusetzen und die Transponder Einrichtung 4 im Abstand 2/3 des Rotorblattes anzuordnen. Das Ausführungsbeispiel der Fig. 3 kombiniert ein optisches System zur Bestimmung einer Verformung eines Rotorblattes mit der erfindungsgemässen Vorrichtung. Durch die Kombination beider Vorrichtungen können die jeweiligen Vorteile genutzt werden. Die optische Detektion ist in der Lage dynamische Ereignisse mit einer hohen Genauigkeit zu erfassen während die RFID-Technik nur bedingt in der Lage ist, dynamische Ereignisse zu detektieren; sie dient vorrangig der Ermittlung der Durchbiegung. Zusätzlich kann das System teilweise redundant arbeiten. Das heißt die Messergebnisse beider Systeme können miteinander verglichen werden, was die Genauigkeit und Zuverlässigkeit der Messung erhöht.

In einer weiteren, in Fig 1 und 2 dargestellten Ausführung der Erfindung ist eine Blattwinkelsteuerung vorgesehen, die einen Blattwinkel des Rotorblattes 2 mit einem Stellglied 20 in Abhängigkeit von dem Mass der Verformung des Rotorblatts 2 an der Stelle der wenigstens einen Transponder Einrichtung 4 steuert. Hierbei kann mit der erfindungsgemässen Vorrichtung eine Verformung des Rotorblattes 2 erfasst werden (gemäss vorstehender Beschreibung) und schliesslich von der Recheneinrichtung 22 eine Stelleinrichtung 20 in Abhängigkeit von der erfassten Verformung des Rotorblatts 2 angesteuert werden, so dass der Blattwinkes des Rotorblattes 2 von der Stelleinrichtung 20 verändert wird.

Die Steuerung des Blattwinkels erfolgt, um das Rotorblatt 2 optimal in den Wind zu stellen, damit die Energieumwandlung möglichst effektiv erfolgen kann. Dazu ist es erforderlich, ein Maß für die Windstärke und Windrichtung zu gewinnen. Insbesondere eine Verformung des Rotorblattes 2 gibt Aufschluss über die Windverhältnisse. In vorteilhafter Weise kann als eine weitere Grösse für die Blattwinkelsteuerung eine Drehzahl des Rotors 8 der Windkraftanlage 1 verwendet werden. Somit können verschiedene auf das Rotorblatt wirkende Parameter erfasst und für eine Rotorblattsteuerung verwendet werden, so dass eine Betriebsdauer des Rotorblatts optimal ausgelegt werden kann.

Es ist dem Fachmann ersichtlich, dass die Erfindung nicht auf die vorstehend beschriebenen Ausführungsbeispiele beschränkt ist, sondern in vielfältiger Weise variiert werden kann. Insbesondere kann die Erfindung auch auf andere elastisch verformbare Objekte angewendet werden.

Bezugszeichenliste

1    Rotornabe

2    Rotorblatt

3    Sende-und Empfangsvorrichtung

4    Transponder Einrichtung

5    Richtcharakteristik der Antennen 24.1 und 24.2

6    Turm der Windkraftanlage

7    Gondel der Windkraftanlage

9    Rotor

10    Retoreflektor

11    Kamera

12    Matrix-Reflektor

20    Stellglied

22    Recheneinrichtung

24    Antenne

**Patentansprüche**

1.    Verfahren zur Bestimmung einer Verformung eines Rotorblattes einer Windkraftanlage mit den folgenden Verfahrensschritten:

- von wenigstens zwei Antennen (24, 24.1, 24.2) einer Sende- und Empfangsvorrichtung (3) wird ein Sendesignal ausgesendet, welches von wenigstens einer Transponder Einrichtung (4) empfangen wird
- die wenigstens eine Transponder Einrichtung (4) sendet ein Antwortsignal, welches von den wenigstens zwei Antennen (24, 24.1, 24.2) der Sende- und Empfangsvorrichtung (3) empfangen wird,

wobei durch einen Zeitunterschied zwischen dem Aussenden des Sendesignals und dem Empfang des Antwortsignals die Ortskoordinaten der wenigstens einen Transponder Einrichtung (4) bestimmt werden und wobei eine Abweichung dieser Ortskoordinate von Orts-Sollkoordinaten ein Mass für die Verformung des Rotorblatts (2)an der Position der wenigstens einen Transponder Einrichtung (4) sind.

2.    Verfahren nach Anspruch 1, **dadurch gekennzeichnet, dass** die Sende- und Empfangsvorrichtung (3) in oder an dem proximalen Ende des Rotorblattes (2) und die wenigstens eine Transponder Einrichtung (4) in Längsachse des Rotorblatts (2) vorgesehen sind.

3.    Verfahren nach Anspruch 1, **dadurch gekennzeichnet, dass** die Sende- und Empfangsvorrichtung (3) in oder an der Nabe (9) des Rotors der Windkraftanlage (1) und die wenigstens eine Transponder Einrichtung (4) in Längsachse des Rotorblatts (2) vorgesehen sind.

4.    Verfahren nach einem der vorhergehenden Ansprüche,
**dadurch gekennzeichnet, dass** die Transponder Einrichtung (4) im distalen Ende des Rotorblattes (2) vorgesehen ist.

5.    Verfahren nach einem der vorhergehenden Ansprüche,
**dadurch gekennzeichnet, dass** die wenigstens zwei Antennen (24, 24.1, 24.2) in einem Antennenarray ausgeführt sind.

6.  Verfahren nach einem der vorhergehenden Ansprüche,
    **dadurch gekennzeichnet, dass** die Transponder Einrichtung (4) als RFID Transponder ausgeführt ist und die Sende-Empfangseinheit (3) RFID Signale sendet und empfängt.

7.  Verfahren nach einem der vorhergehenden Ansprüche,
    **dadurch gekennzeichnet, dass**
    zumindest eine optisch erfassbaren Markierung (10) auf einer Längsposition des wenigstens einen Rotorblatts (2), eine Kamera (11) mit einem Matrix-Sensor (12) zur Erfassung der optisch erfassbaren Markierung (10), eine Bildverarbeitungsvorrichtung und eine Recheneinrichtung (22) verwendet werden, wobei die Kamera (11) so auf die optisch erfassbare Markierung (10) gerichtet ist, dass die optisch erfassbare Markierung (10) auf den Matrix-Sensor (12) abgebildet wird,
    wobei die Bilddaten des Matrix-Sensors (12) der Bildverarbeitungsvorrichtung zugeführt werden und die Bildverarbeitungsvorrichtung eine Bilderkennung durchführt und die Position der optisch erfassbaren Markierung (10) auf dem Matrix-Sensor (12) ermittelt, wobei die optisch erfassbare Markierung (10) einen Reflektor, vorzugsweise einen Retroreflektor (10) umfasst und wobei die Recheneinrichtung (22) eine Abweichung der Position der optisch erfassbare Markierung (10) von zumindest einem Sollwert ermittelt und quantifiziert und damit die Position der optisch erfassbaren Markierung (10) relativ zu der optischen Achse der Kamera (11) feststellt.

8.  Verfahren nach Anspruch 7, **dadurch gekennzeichnet, dass** ein Vergleich der Abweichung der optisch erfassbaren Markierung (10) von der Sollposition mit der Abweichung der die aus den empfangenen Antwortsignals der Transponder Einrichtung (4) bestimmten Ortskoordinaten der wenigstens einen Transponder Einrichtung (4) von den Orts-Sollkoordinaten durchgeführt wird.

9.  Verfahren nach einem der vorhergehenden Ansprüche,
    **dadurch gekennzeichnet, dass** wenigstens ein Mass der Abweichung der ermittelten Ortskoordinaten der Transponder Einrichtung (4) als Warn- und/oder Alarmschwellen festgelegt wird und dass bei einer Überschreitung dieses Masses ein Warnsignal ausgegeben wird.

10. Verfahren nach einem der vorhergehenden Ansprüche,

**dadurch gekennzeichnet, dass** eine Laufzeit des jeweiligen Sendesignals der wenigstens zwei Antennen (24, 24.1, 24.2) und das Antwortsignals der Transponder Einrichtung (4) bestimmt und aus der Laufzeit eine Entfernung der Transponder Einrichtung (4) von der Sende-und Empfangsvorrichtung (3) und damit die Position der Transponder Einrichtung (4) ermittelt.

11. Vorrichtung zur Bestimmung einer Verformung eines Rotorblattes (2) einer Windkraftanlage (1) mit einer Sende- und Empfangsvorrichtung (3), wenigstens einer Transponder Einrichtung (4) und eine Recheneinrichtung (22),
    wobei die wenigstens eine Transponder Einrichtung (4) in Längsachse des Rotorblatts (2) vorgesehen ist,
    wobei die Sende- und Empfangsvorrichtung (3) wenigstens zwei Antennen (24, 24.1, 24.2) umfasst,
    wobei von jeder der wenigstens zwei Antennen (24, 24.1, 24.2) ein Sendesignal aussendbar ist, welches von der wenigstens einen Transponder Einrichtung (4) empfangbar ist,
    wobei von der wenigstens einen Transponder Einrichtung (4) ein Antwortsignal aussendbar ist, welches von jeder der wenigstens zwei Antennen (24, 24.1, 24.2) empfangbar ist,
    wobei von der Recheneinrichtung (22) ein Zeitunterschied zwischen dem Aussenden des Sendesignals und dem Empfang des Antwortsignals die Ortkoordinaten der wenigstens einen Transponder Einrichtung (4) bestimmbar sind und wobei eine Abweichung dieser Ortskoordinaten von Orts-Sollkoordinaten ein Mass für die Verformung des Rotorblatts (2) an der Stelle der wenigstens einen Transponder Einrichtung (4) sind.

12. Vorrichtung nach Anspruch 11, **dadurch gekennzeichnet, dass**
    zumindest eine optisch erfassbaren Markierung (10) auf einer Längsposition des wenigstens einen Rotorblatts (2), eine Kamera (11) mit einem Matrix-Sensor (12) zur Erfassung der optisch erfassbaren Markierung (10), eine Bildverarbeitungsvorrichtung und eine Recheneinrichtung (22) vorgesehen sind, wobei die Kamera so auf die optisch erfassbare Markierung (10) gerichtet ist, dass die optisch erfassbare Markierung (10) auf den Matrix-Sensor (12) abbildbar ist,
    wobei die Bilddaten des Matrix-Sensors (12) der Bildverarbeitungsvorrichtung zuführbar sind und mit der Bildverarbeitungsvorrichtung eine Bilderkennung durchführbar ist und die Position der optisch erfassbaren Markierung (10) auf dem Matrix-Sensor (12) ermittelbar ist,
    wobei die optisch erfassbare Markierung (10) einen Reflektor, vorzugsweise einen Retroreflektor (10) umfasst und wobei von der Recheneinrichtung (22) eine Abweichung der Position der optisch erfassbare Markierung (10) von zumindest einem Sollwert ermittelbar und zu quantifizierbar ist und damit die Position der optisch erfassbaren Markierung (10) relativ zu der optischen Achse der Kamera (11) feststellbar ist.

13. Vorrichtung nach einem der Ansprüche 11 oder 12, **dadurch gekennzeichnet, dass** eine Vielzahl von Transponder-Einrichtungen (4) in Längsachse des Rotorblattes (2) vorgesehen sind.

14. Vorrichtung nach einem der Ansprüche 11 bis 13, **dadurch gekennzeichnet, dass** eine Blattwinkelsteuerung vorgesehen ist, die einen Blattwinkel des Rotorblattes (2) mit einem Stellglied (20) in Abhängigkeit von dem Mass der Verformung des Rotorblatts (2) an der Stelle der wenigstens einen Transponder Einrichtung (4) steuert.

15. Vorrichtung nach einem der Anspruch 14, **dadurch gekennzeichnet, dass** als eine weitere Grösse für die Blattwinkelsteuerung eine Drehzahl des Rotors (9) der Windkraftanlage (1) verwendet wird.

Fig. 1

**Fig. 2**

Fig. 3

Europäisches
Patentamt

European
Patent Office

Office européen
des brevets

**EUROPÄISCHER RECHERCHENBERICHT**

**Nummer der Anmeldung**

EP 11 17 7687

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/150647 A1 (GIERLICH ROLAND [DE] ET AL) 23. Juni 2011 (2011-06-23) * Absätze [0009], [0060] - [0063]; Abbildungen 1-4 * ----- | 1-15 | INV. F03D11/00 |
| X | DE 10 2006 002708 A1 (SIEMENS AG [DE]) 26. Juli 2007 (2007-07-26) * Zusammenfassung; Abbildungen 1-4 * ----- | 1-15 | |
| X | EP 2 239 462 A1 (SIEMENS AG [DE]) 13. Oktober 2010 (2010-10-13) * Zusammenfassung; Abbildung 3 * ----- | 1-15 | |
| X | WO 2010/054661 A2 (VESTAS WIND SYS AS [DK]; LI XIAO QIAN [SG]) 20. Mai 2010 (2010-05-20) * Zusammenfassung; Abbildung 10 * ----- | 1-15 | |
| X | WO 2009/143850 A2 (VESTAS WIND SYS AS [DK]; OLESEN IB SVEND [DK]; ABDALLAH IMAD [DK]) 3. Dezember 2009 (2009-12-03) * Zusammenfassung; Abbildungen 3,4,6,8,11 * ----- | 1-15 | **RECHERCHIERTE SACHGEBIETE (IPC)** F03D |
| X | DE 10 2006 002709 A1 (SIEMENS AG [DE]) 26. Juli 2007 (2007-07-26) * Zusammenfassung; Abbildungen 7a,7b * ----- | 1,11 | |

Der vorliegende Recherchenbericht wurde für alle Patentansprüche erstellt

| Recherchenort | Abschlußdatum der Recherche | Prüfer |
|---|---|---|
| München | 14. Juni 2012 | Avramidis, Pavlos |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 7687

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2012

| Im Recherchenbericht angeführtes Patentdokument | Datum der Veröffentlichung | Mitglied(er) der Patentfamilie | Datum der Veröffentlichung |
|---|---|---|---|
| US 2011150647 A1 | 23-06-2011 | CA 2725360 A1<br>CN 102102639 A<br>DE 102009058595 A1<br>EP 2357359 A2<br>JP 2011127605 A<br>US 2011150647 A1 | 17-06-2011<br>22-06-2011<br>22-06-2011<br>17-08-2011<br>30-06-2011<br>23-06-2011 |
| DE 102006002708 A1 | 26-07-2007 | DE 102006002708 A1<br>WO 2007082635 A1 | 26-07-2007<br>26-07-2007 |
| EP 2239462 A1 | 13-10-2010 | CA 2698878 A1<br>EP 2239462 A1<br>US 2010253569 A1 | 07-10-2010<br>13-10-2010<br>07-10-2010 |
| WO 2010054661 A2 | 20-05-2010 | KEINE | |
| WO 2009143850 A2 | 03-12-2009 | KEINE | |
| DE 102006002709 A1 | 26-07-2007 | DE 102006002709 A1<br>WO 2007082821 A1 | 26-07-2007<br>26-07-2007 |

EPO FORM P0461

Für nähere Einzelheiten zu diesem Anhang : siehe Amtsblatt des Europäischen Patentamts, Nr.12/82